# EUROPÄISCHE PATENTSCHRIFT

(11) **EP 1 636 058 B1**
(45) Veröffentlichungstag und Bekanntmachung des Hinweises auf die Patenterteilung: **26.08.2009**
(21) Anmeldenummer: 04738677.6
(22) Anmeldetag: 04.06.2004
(51) Int. Cl.: B60J 5/04

(54) **MULTIFUNKTIONSTR GER FÜR EIN KRAFTFAHRZEUG**
MULTIFUNCTIONAL SUPPORT FOR USE IN A MOTOR VEHICLE
SUPPORT MULTIFONCTIONNEL POUR UN VEHICULE AUTOMOBILE

(30) Priorität: 06.06.2003 DE 20309170 U
(43) Veröffentlichungstag der Anmeldung: 22.03.2006
(73) Patentinhaber: Brose Fahrzeugteile GmbH & Co. KG, Coburg, 96450 Coburg (DE)
(72) Erfinder: BÜCKER, Rolf, 96047 Bamberg (DE); LEVE, Dirk, 41470 Neuss-Allerheiligen (DE); SCHLECHTRIEMEN, Martin, 96173 Oberhaid (DE); BUNZEL, Christoph, 42349 Wuppertal (DE)
(74) Vertreter: Baumgärtel, Gunnar
(86) Internationale Anmeldenummer: PCT/DE2004/001226
(87) Internationale Veröffentlichungsnummer: WO 2004/108454

(56) Entgegenhaltungen:
- WO-A-01/07277
- DE-U- 29 912 034
- DE-U- 29 916 066

## Beschreibung

Die Erfindung betrifft einen Multifunktionsträger für ein Kraftfahrzeug nach dem Oberbegriff des Anspruchs 1.

Ein derartiger Multifunktionsträger umfasst einen mit Befestigungsstellen versehenen Halteabschnitt zur Befestigung des Multifunktionsträgers an einem Aggregateträger einer Kraftfahrzeugtür; eine mit dem Halteabschnitt verbundene; längserstreckte Scheibenführung für eine seitliche Scheibenkante einer Fensterscheibe in einem Kraftfahrzeug, insbesondere in Form eines Führungskanales; sowie Befestigungsstellen zur Befestigung eines Türschlosses an dem Multifunktionsträger, wobei der Halteabschnitt des Multifunktionsträgers mit der Scheibenführung entlang eines zwischen zwei Endbereichen erstreckten Teilabschnittes der Scheibenführung verbunden ist.

Ein solcher Multifunktionsträger, wie er z. B. aus der DE 195 11 294 A1 bekannt ist, dient zur Vormontage eines an dem Multifunktionsträger befestigten Türschlosses sowie der in den Multifunktionsträger integrierten Scheibenführung an einem Aggregateträger in Form eines Türmodulträgers, der anschließend zusammen mit dem Multifunktionsträger an einer Kraftfahrzeugtür, z. B. einem Türinnenblech oder einem Türrahmen einer Kraftfahrzeugtür, befestigt wird. Nach der Befestigung des Aggregateträgers an der Kraftfahrzeugtür werden dann auch das Türschloss sowie die Scheibenführung selbst an Karosserieteilen der Kraftfahrzeugtür befestigt. Aufgrund der Befestigung einerseits des den Multifunktionsträger tragenden Aggretateträgers an der Kraftfahrzeugtür und andererseits der am Multifunktionsträger angeordneten Baugruppen Türschloss und Scheibenführung an der Kraftfahrzeugtür liegt hinsichtlich der Befestigung eine Überbestimmung des Systems vor, so dass es aufgrund von Toleranzen in den einzelnen Baugruppen zu Schwierigkeiten bei deren Verbindung mit der Kraftfahrzeugtür kommen kann.

Alternativ kann der Aggregateträger, an dem der Multifunktionsträger vormontiert wird, auch unmittelbar durch die Türinnenhaut selbst, insbesondere ein Türinnenblech, gebildet werden.

Es ist daher für die Montage zweckmäßig, an dem Multifunktionsträger Mittel vorzusehen, die bei der Befestigung der einzelnen Baugruppen des Multifunktionsträgers, insbesondere des Türschlosses sowie der Scheibenführung, an einer Türkarosserie den Ausgleich von Toleranzen gestatten. Hierbei besteht jedoch das Problem, dass eine entsprechend flexible Ausgestaltung des Multifunktionsträgers zu einer Beeinträchtigung von dessen Stabilität führen kann.

Weiterhin ist aus der DE 299 16 066 U1 ein Multifunktionsträger bekannt, der einen Halteabschnitt zur Befestigung des Multifunktionsträgers an einem Aggregateträger einer Kraftfahrzeugtür aufweist. An dem Multifunktionsträger befinden sich Befestigungsstellen zur Befestigung eines Türschlosses. Der Haltabschnitt ist mit dem Endabschnitt einer längserstreckten Scheibenführung für eine Fensterscheibe verbunden.

Der Erfindung liegt das Problem zugrunde, einen Multifunktionsträger der eingangs genannten Art weiter zu verbessern, insbesondere bei hinreichender Stabilität des Multifunktionsträgers den Ausgleich von Toleranzen bei der Montage zu ermöglichen.

Dieses Problem wird erfindungsgemäß durch die Schaffung eines Multifunktionsträgers mit den Merkmalen des Anspruchs 1 gelöst.

Danach ist der Halteabschnitt in einem Endbereich des längserstreckten Teilabschnittes des Multifunktionsträgers (entlang dessen der Halteabschnitt mit der Scheibenführung verbunden ist) im Wesentlichen starr mit der Scheibenführung verbunden und in dem in Längsrichtung anderen Endbereich des längserstreckten Teilabschnittes flexibel, d.h. über einen elastisch oder plastisch deformierbaren Bereich, mit der Scheibenführung verbunden.

Die Begriffe "im Wesentlichen starr" einerseits und "flexibel" andererseits sind dabei so zu verstehen, dass eine bei der Montage zu Zwecken des Toleranzausgleichs erforderliche Relativbewegung des Halteabschnittes des Multifunktionsträgers bezüglich der Scheibenführung im Wesentlichen durch eine Deformation der flexiblen Anbindung des Halteabschnittes an die Scheibenführung in dem entsprechenden Endbereich des längserstreckten Teilabschnittes erfolgt, während im Bereich der starren Anbindung des Halteabschnittes an die Scheibenführung während der Montage substanzielle Verformung stattfindet.

Die erfindungsgemäße Lösung hat den Vorteil, dass sie bei einer hinreichenden Flexibilität zugleich auch eine besondere Stabilität des Multifunktionsträgers gewährleistet, indem eine flexible Anbindung des Halteabschnittes an die Scheibenführung mit einer starren Anbindung kombiniert wird. Dabei ist von Bedeutung, dass die flexible Anbindung in einem Endbereich des Teilabschnittes erfolgt, entlang dessen der Halteabschnitt mit der Scheibenführung verbunden ist, während in dem anderen Endbereich des längserstreckten Teilabschnittes eine starre Anbindung vorliegt. Hierdurch steht ein entsprechend großer Hebelarm für eine Auslenkung des Halteabschnittes relativ zu der Scheibenführung in dem erstgenannten Endbereich des Teilabschnittes zur Verfügung.

Indem zwischen den beiden Endbereichen des längserstreckten Teilabschnittes des Multifunktionsträgers eine Ausnehmung angeordnet ist, wird eine gewisse Entkopplung der flexiblen Anbindung von der starren Anbindung des Halteabschnittes an die Scheibenführung bewirkt, so dass eine hinreichende Auslenkbarkeit der Scheibenführung relativ zu dem Halteabschnitt des Multifunktionsträgers im Bereich der flexiblen Anbindung gewährleistet ist.

Das Türschloss selbst (oder ggf. ein anderes, vorzumontierendes Funktionselement) wird an dem Multifunktionsträger vorzugsweise im Bereich der flexiblen Verbindung des Halteabschnittes mit der Scheibenführung angeordnet, um bei der Montage eine Toleranzen ausgleichende Positionierung des Türschlosses zu ermöglichen.

In einer konkreten Ausführungsform wird die erfindungsgemäße Lösung dadurch realisiert, dass der Halteabschnitt des Multifunktionsträgers entlang des längserstreckten Teilabschnittes von der Scheibenführung absteht und dabei mit einem Endbereich des Teilabschnittes im Wesentlichen starr und mit dem anderen Endbereich des Teilabschnittes über mindestens eine Deformationseinrichtung in Verbindung steht. Die zur flexiblen Anbindung des Halteabschnittes an den zweiten Endbereich des längserstreckten Teilabschnittes des vorgesehene Deformationseinrichtung wird dabei vorzugsweise durch einen elastisch (oder ggf. plastisch) deformierbaren Bereich des Multifunktionsträgers gebildet.

Der deformierbare Bereich kann beispielsweise an dem Halteabschnitt und/oder an der Scheibenführung ausgebildet sein und ist dabei vorzugsweise einstückig in den Multifunktionsträger integriert.

Der Multifunktionsträger wiederum wird vorzugsweise durch eine einstückig geformte, aus Kunststoff bestehende, insbesondere spritzgegossene Baugruppe gebildet, die den Halteabschnitt sowie die Scheibenführung als einstückig ausgeformte Bestandteile enthält.

Durch die flexible Anbindung des Halteabschnittes an die Scheibenführung soll insbesondere eine zum Toleranzausgleich dienende Auslenkbarkeit des Halteabschnittes entlang einer Raumrichtung senkrecht zu der Erstreckungsrichtung der Scheibenführung ermöglicht werden. Wenn der Multifunktionsträger in eine Kraftfahrzeugtür eingebaut ist, dann erstreckt sich die Scheibenführung entlang der vertikalen Fahrzeugachse; dementsprechend wird durch die flexible Anbindung der Scheibenführung an den Halteabschnitt des Multifunktionsträgers ein Toleranzausgleich entlang einer horizontalen Fahrzeugachse, insbesondere entlang der Fahrzeuglängsachse oder ggf. der hierzu senkrecht verlaufenden horizontalen Fahrzeugquerachse ermöglicht.

Die Befestigungsstellen für das Türschloss sind an dem Multifunktionsträger vorzugsweise beidseits des deformierbaren Bereiches vorgesehen, und zwar mindestens eine Befestigungsstelle am Halteabschnitt und mindestens eine weitere Befestigungsstelle an der Scheibenführung des Multifunktionsträgers.

Gemäß einer bevorzugten Weiterbildung der Erfindung ist mindestens eine Befestigungsstelle auf der einen Seite des deformierbaren Bereiches, und zwar insbesondere die an der Scheibenführung vorgesehene Befestigungsstelle, zur Schaffung einer starren Verbindung ausgebildet, z. B. in Form einer Befestigungsöffnung für eine Schraube oder einen Niet, und mindestens eine auf der anderen Seite des deformierbaren Bereiches, insbesondere an dem Halteabschnitt vorgesehene Befestigungsstelle zur Schaffung einer spielbehafteten Verbindung, z.B. mit einem Rastelement als Anschlag, ausgebildet. Die spielbehaftete Verbindung kann durch eine Schiebeführung realisiert werden, die sich entlang der Richtung erstreckt, entlang der die Scheibenführung relativ zu dem Haltewinkel bewegbar (auslenkbar) ist, also insbesondere entlang der Fahrzeuglängsachse. Durch die hiermit verbundene Beweglichkeit des Türschlosses relativ zu der einen Befestigungsstelle wird erreicht, dass die Überbrückung des Deformationsbereiches durch das Türschloss die Funktion des Deformationsbereiches nicht beeinträchtigt.

Mit Vorteil ist ferner die eine Befestigungsstelle für das Türschloss derart flexibel an den Multifunktionsträger angebunden bzw. ausgebildet, dass die Position dieser Befestigungsstelle bei der Montage zu Zwecken des Toleranzausgleichs etwas verändert werden kann, und zwar insbesondere entlang der horizontalen Fahrzeugquerachse (im wesentlichen senkrecht zur Schiebeführung der einen Befestigungsstelle).

Für eine möglichst verdrehsteife Befestigung der Scheibenführung an der Türkarosserie, insbesondere an einer Stirnseite einer Kraftfahrzeugtür, ist am oberen und unteren Ende der Scheibenführung jeweils mindestens eine Befestigungsstelle angeordnet. Dies ist von Bedeutung, da beim Zuschlagen einer Kraftfahrzeugtür eine erhebliche Belastung der Scheibenführung durch das hierbei auftretende Drehmoment erfolgen kann. Indem zwischen den beiden Befestigungsstellen, über die die Scheibenführung an der Türkarosserie befestigt wird, noch eine Befestigungsstelle für das Türschloss angeordnet ist, können außerdem noch Kräfte in das Türschloss eingeleitet werden. Dabei sollte diese Befestigungsstelle so gestaltet werden, dass beim Zuschlagen der Fahrzeugtür auftretende Querkräfte nicht nur über das entsprechende Befestigungsmittel, z. B. einen Niet oder einer Schraube, von der Scheibenführung zum Türschloss weitergeleitet werden, sondern dass vielmehr die entsprechende Befestigungsstelle flächig an dem Türschloss anliegt, so dass eine entsprechend großflächige Krafteinleitung erfolgen kann. Hierdurch soll die Belastung der Befestigungsmittel selbst minimiert werden; und die Querkräfte (wirkend entlang der horizontalen Fahrzeugquerachse) werden von dem Verbund aus Türschloss und Scheibenführung in die Türkkarosserie übertragen.

Von dem Türschloss werden die entsprechenden Kräfte dann weiter in die Fahrzeugkarosserie abgeleitet, an der das Türschloss ja zusätzlich befestigt ist.

Ferner können an dem Multifunktionsträger Befestigungsstellen für ein Abdeckelement in Form einer Sicherungsabdeckung vorgesehen sein, um gefährdete Schlossteile gegen Manipulation zu schützen (Diebstahlsicherung).

Darüber hinaus ist an dem Multifunktionsträger ein Lagerabschnitt für einen Türaußengriffhalter vorgesehen, der zur Aufnahme des Außengriffs einer Fahrzeugtür dient. Da die Position des Türaußengriffs durch die Lage der Türaußenhaut des entsprechenden Kraftfahrzeugs festgelegt ist und andererseits die Position des Lagerabschnittes des Multifunktionsträgers durch dessen Anbindung an die Türinnenhaut (über den Aggregateträger) definiert ist, sind auch hier Mittel zum Toleranzausgleich erforderlich, die durch eine abschnittsweise flexible, d. h. elastisch oder plastisch deformierbare, Ausbildung des Lagerabschnittes zur Verfügung gestellt werden können.

Schließlich können an dem Multifunktionsträger noch Halter für elektrische Kabel angeformt sein, insbesondere für Türschlösser mit sogenanntem "keyless entry", also für Schlösser, die durch Signale eines Chips eines Berechtigten betätigbar sind und die dementsprechend mit geeigneten Signalleitungen kontaktiert werden müssen.

Weitere Merkmale und Vorteile der Erfindung werden bei der nachfolgenden Beschreibung von Ausführungsbeispielen anhand der Figuren deutlich werden.

Es zeigen:
- Fig. 1a und 1b: zwei perspektivische Ansichten eines Multifunktionsträgers für eine Beifahrertür eines Kraftfahrzeugs, an dem ein Halter für einen Türaußengriff befestigt ist;
- Fig. 2a und 2b: zwei perspektivische Darstellungen eines Multifunktionsträgers entsprechend den Figuren 1a und 1b jedoch zur Befestigung an einer Fahrertür eines Kraftfahrzeugs;
- Fig. 3: eine vergrößerte Darstellung eines Lagerabschnittes des Multifunktionsträgers, an dem ein Griffhalter für den Türaußengriff befestigbar ist.

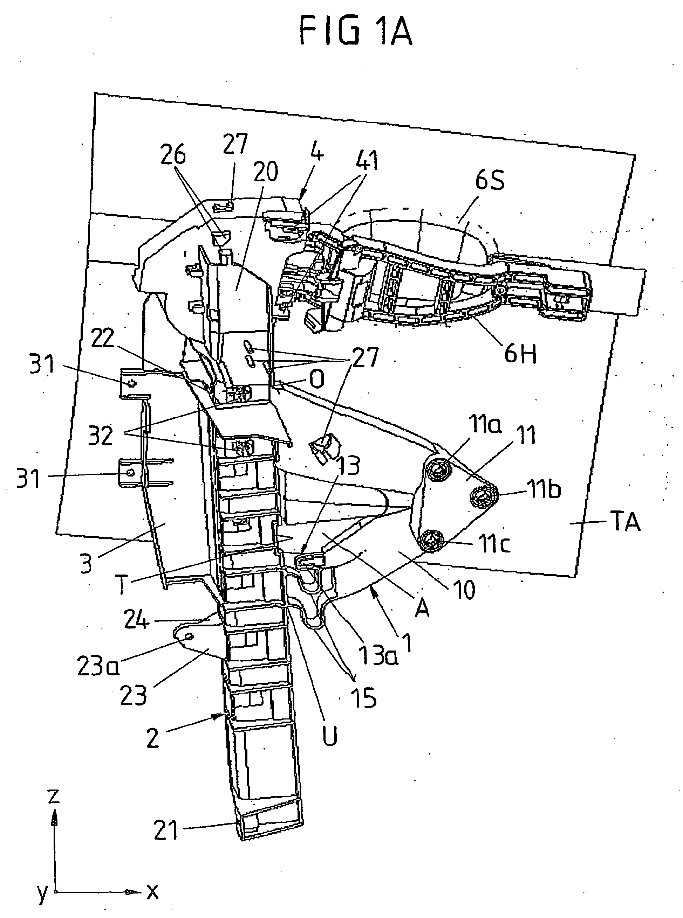

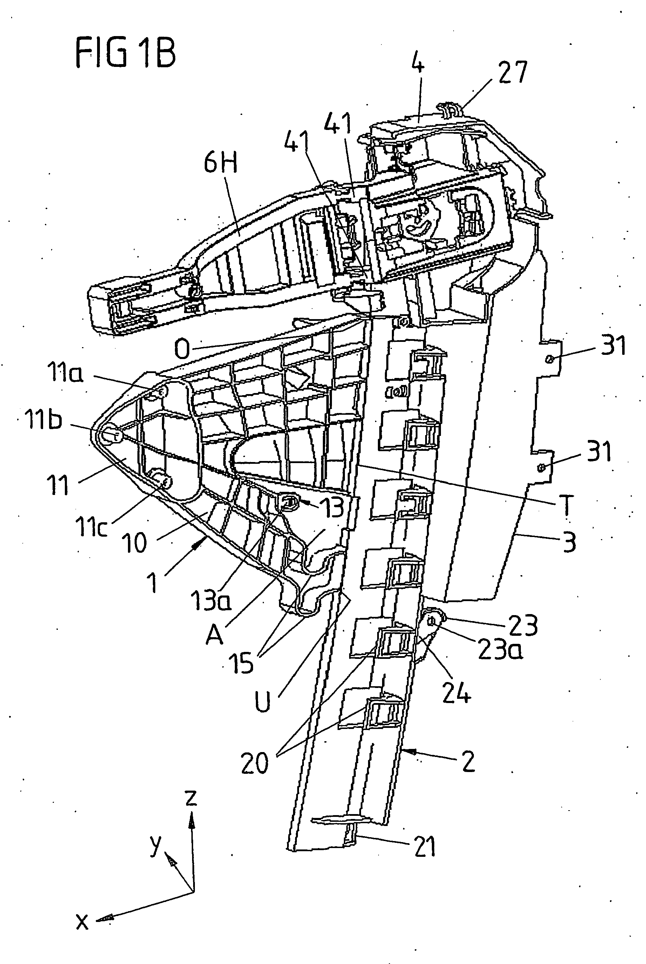

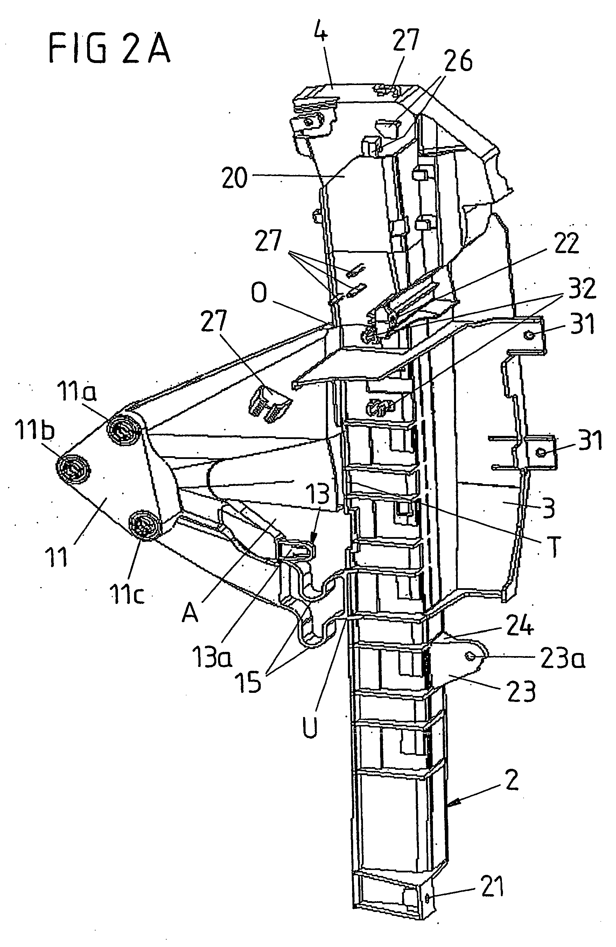

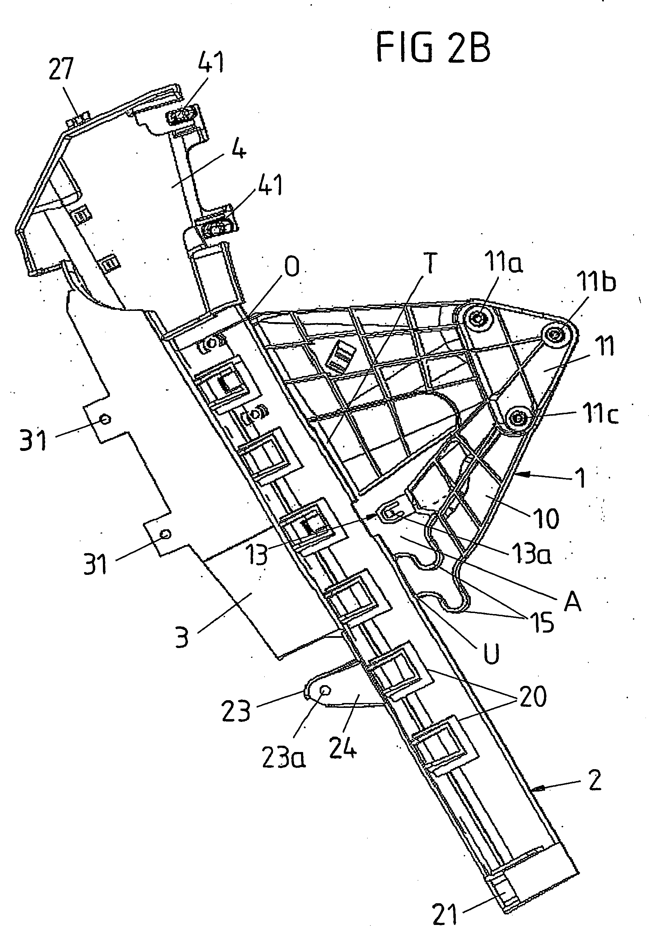

In den Figuren 1a und 1b sowie 2a und 2b ist jeweils ein Multifunktionsträger für eine Kraftfahrzeugtür dargestellt, wobei der in den Figuren 1a und 1b gezeigte Multifunktionsträger für eine Beifahrertür ausgebildet und vorgesehen ist und der in den Figuren 2a und 2b dargestellte Multifunktionsträger für eine Fahrertür ausgebildet und vorgesehen ist. Die beiden Multifunktionsträger bestehen aus übereinstimmenden Komponenten; sie sind lediglich - entsprechend ihrer Anordnung an einer Beifahrer bzw. Fahrertür - zueinander spiegelbildlich ausgebildet.

Der jeweilige Multifunktionsträger ist einstückig aus Kunststoff geformt (spritzgegossen) und weist als wesentliche Bestandteile einen Halteabschnitt 1 und eine Scheibenführung 2 auf. Der Halteabschnitt 1 wird gebildet durch einen von der Scheibenführung 2 abstehenden Haltewinkel 10 und die Scheibenführung 2 bildet einen Führungskanal 20 zur Führung einer seitlichen Kante einer (höhenverstellbaren) Fensterscheibe der entsprechenden Fahrzeugtür.

Der durch den Haltewinkel 10 gebildete Halteabschnitt 1 ist vorgesehen zur Befestigung an einem Aggregateträger und weist hierfür einen Befestigungsbereich 11 mit Befestigungsstellen 11a, 11 b, 11 c auf, die für eine Niet- bzw. Schraubbefestigung des Haltewinkels 10 an dem Aggregateträger vorgesehen sind. Bei dem Aggregateträger handelt es sich typischerweise um eine Trägerplatte, an der unterschiedliche Funktionskomponenten einer Kraftfahrzeugtür, wie z. B. ein Fensterheber, ein Airbagmodul, Lautsprecher sowie der in den Figuren dargestellte Multifunktionsträger außerhalb der Kraftfahrzeugtür vormontiert und zu einem vorprüfbaren Türmodul zusammengefasst werden können. Der Aggregateträger wird dann zusammen mit den hierauf vormontierten Funktionskomponenten auf der Innenseite einer Kraftfahrzeugtür, z. B. der Türinnenhaut oder einem inneren Türrahmen, befestigt.

Die Scheibenführung 2 bildet mittels des Führungskanales 20 einen seitlichen Umgriff für eine Seitenkante einer höhenverstellbaren Fensterscheibe, ist längserstreckt ausgebildet und über einen Teilabschnitt T ihrer Längserstreckung zwischen einem oberen Endbereich O und einem unteren Endbereich U einstückig mit dem Haltewinkel 10 verbunden. Die Erstreckungsrichtung z der Scheibenführung 2 entspricht im eingebauten Zustand des Multifunktionsträgers der vertikalen Fahrzeugachse (z-Achse), entsprechend der Erstreckungsrichtung der seitlichen Kanten einer Fensterscheibe.

Die Scheibenführung ist an ihrem unteren Ende und an ihrem oberen Ende jeweils mit einer Befestigungsöffnung 21 bzw. 22 versehen, mittels der sie durch Schrauben oder Nieten an der B-säulenseitigen Stirnseite einer Kraftfahrzeugtür befestigbar ist.

Ferner sind an der Scheibenführung 2 oberhalb des Führungskanales 20 elastische, dämpfende Führungsmittel 26 (Spreizer) vorgesehen, die z. B. aus beflocktem Gummi bestehen können und einen optimalen Einlauf einer Fensterscheibe in den Führungskanal 20 gewährleisten sollen, indem sie dessen oberes freies Ende aufweiten. Der Abstand der Führungsmittel 26 ist größer als die lichte Weite des Führungskanales 20.

Darüber hinaus sind an der Scheibenführung 2 und teilweise auch an dem Haltewinkel 10 Halter 27 für elektrische Kabel angeformt, die z. B. zur Übermittlung von Signalen für ein Keyless-Entry-System dienen können.

Auf der dem Haltewinkel 10 in Fahrzeuglängsrichtung x abgewandten Seite der Scheibenführung 2 ist an dieser ein Befestigungsabschnitt 3 angeformt, der zwei Befestigungsstellen 31 in Form Befestigungsöffnungen aufweist, die zur Befestigung einer Schlossabdeckung (Diebstahlsicherung) durch Nieten dienen. Mit einer derartigen Abdeckung soll eine Manipulation eines an dem Multifunktionsträger in nachstehend noch zu erläuternder Weise zu befestigenden Türschlosses verhindert werden. Als weitere Befestigungsstellen für diese Abdeckung sind an der Scheibenführung 2 zwei Formschlusselemente 32 in Form von Rast- bzw. Klippselementen angeformt.

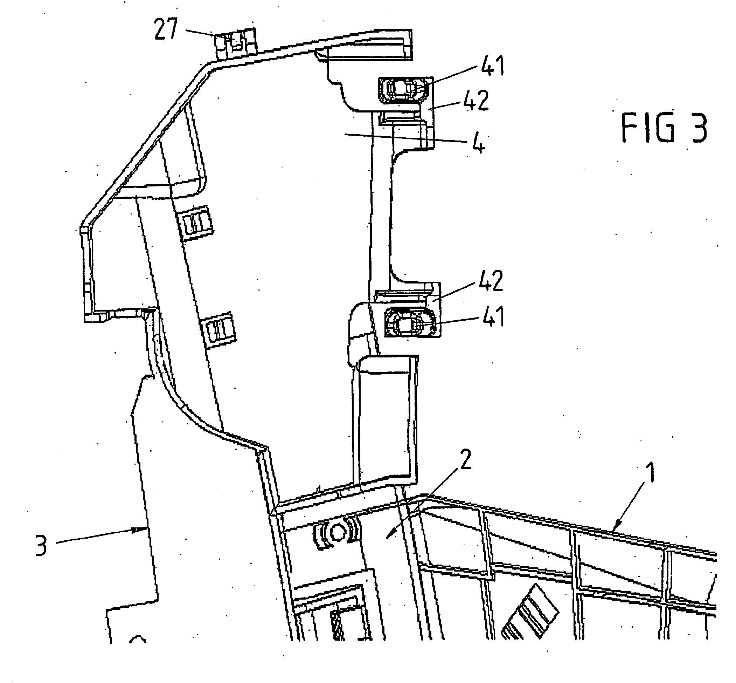

An ihrem entlang der vertikalen Fahrzeugachse z oberen Ende ist an der Scheibenführung 2 ein Lagerabschnitt 4 angeformt, der Befestigungsstellen 41 für einen Außengriffhalter GH in Form eines Lagerbügels aufweist, an welchem wiederum die Griffschale GS eines Türaußengriffes befestigbar ist, vergl. Fig. 3. Da diese Griffschalen GS an der Türaußenhaut TA anzuordnen ist, andererseits aber der als Lagerbügel ausgebildete Griffhalter GH über den Multifunktionsträger und einen Aggregateträger mit der Türinnenhaut verbunden ist, sind die Lagerstellen 41 für den Griffhalter GH über flexible (elastisch deformierbare) Haltebügel 42 mit dem Lagerabschnitt 4 verbunden. Diese federnde bzw. flexible Anbindung der Befestigungsstellen 41 an dem Lagerabschnitt 4 über die Haltebügel 42 ermöglicht den Ausgleich von Toleranzen entlang der horizontalen Fahrzeugquerachse y, d. h. senkrecht zur vertikalen Fahrzeugachse z und senkrecht zur Fahrzeuglängsachse x bei der Montage des Türaußengriffs.

Schließlich sind an dem Multifunktionsträger zwei Befestigungsstellen 13, 13a bzw. 23, 23a zur Befestigung eines Türschlosses vorgesehen. Die eine Befestigungsstelle 13, 13a ist am Haltewinkel 10 des Multifunktionsträgers angeformt, weist eine in Fahrzeuglängsrichtung x erstreckte Schiebeführung 13a mit einem Rastelement als Anschlag auf und überragt eine Ausnehmung A des Haltewinkels 10. Die andere Befestigungsstelle 23, 23a wird gebildet durch eine Befestigungsöffnung 23a in einem von der Scheibenführung 2 abstehenden und an dieser angeformten Befestigungsbock 23, der zudem eine Versteifungsrippe 24 aufweist. Diese Befestigungsstelle 23, 23a dient zur Befestigung des Türschlosses an dem Multifunktionsträger mittels einer Niet- bzw. Schraubverbindung. Das entsprechende Türschloss wird zudem, wie auch die Scheibenführung 2, direkt mit der Türkarosserie verbunden.

Die zweite Befestigungsstelle 23, 23a für das Türschloss befindet sich an der Scheibenführung 2 zwischen deren unterer Befestigungsstelle 21 und deren oberer Befestigungsstelle 22, so dass beim Zuschlagen der Fahrzeugtür auf die Scheibenführung wirkende Kräfte bzw. Momente nicht nur über deren Befestigungsstellen 21, 22, sondern zudem auch über das Türschloss abgeleitet werden können. Der Befestigungsbock 23 ist dabei derart ausgebildet, dass er flächig an dem zu befestigenden Türschloss anliegen kann. Hierdurch können Kräfte bzw. Momente nicht nur über die verwendeten Befestigungsmittel, sondern auch unmittelbar über die aneinander anliegenden Flächen des Befestigungsbockes 23 und des Türschlosses abgeleitet werden.

Zwischen den beiden Befestigungsstellen 13, 13a; 23, 23a für das Türschloss ist in der Umgebung des unteren Endbereiches U des längserstreckten Teilabschnittes T, entlang dessen der Haltewinkel 10 von der Scheibenführung 2 absteht, ein Deformationsbereich 15 an dem Haltewinkel 10 ausgebildet bzw. geformt, der entlang der Fahrzeuglängsachse x deformierbar ist und somit eine Verschiebung des Haltewinkels 10 relativ zu der Scheibenführung 2 entlang der Fahrzeuglängsachse x im Bereich des unteren Endes U des Teilabschnittes T der Scheibenführung 2 ermöglicht. Im Bereich des oberen Endes O des Teilabschnittes T ist der Haltewinkel 10 demgegenüber starr mit der Scheibenführung 2 verbunden. Dabei ist in dem Haltewinkel 10 in einem Bereich zwischen dem oberen Endbereich O des Teilabschnittes T und dessen unterem Endbereich U eine Ausnehmung A vorgesehen, die den starr an die Scheibenführung 2 angekoppelten oberen Teil des Haltewinkels 10 von dessen flexibel bzw. federnd an die Scheibenführung 2 angebundenen unteren Teil teilweise entkoppelt. Hierdurch lässt sich der Halteabschnitt 10 am unteren Endbereich U des Teilabschnittes T bezüglich der Scheibenführung 2 auslenken, wobei die starre Anbindung am oberen Endbereich O wie ein Drehpunkt wirkt.

Mittels der Schiebeführung 13a der ersten Befestigungsstelle 13, 13a lässt sich das Türschloss entlang der Fahrzeuglängsachse x begrenzt relativ zu dieser Befestigungsstelle 13, 13a verschieben, entsprechend der Verformbarkeit des Deformationsbereiches 15 entlang dieser Richtung. Die Verschiebbarkeit des Türschlosses in der Schiebeführung 13a wird dabei begrenzt durch Anschläge an den Enden der Schiebeführung. Aufgrund dieser spielbehafteten, verschieblichen Befestigung des Türschlosses an der einen Befestigungsstelle 13, 13a wird erreicht, dass eine elastische Verformung des Deformationsbereiches 15 bei der Montage des Türschlosses oder des Scheibenführung 2 an der Türkarosserie von einer entsprechende Bewegung des Türschlosses relativ zu der einen Befestigungsstelle 13, 13a begleitet werden kann, so dass das Türschloss die mit der Verformung des Deformationsbereiches 15 einhergehende Bewegung der Scheibenführung 2 relativ zu dem Halteabschnitt 10 nicht behindert. Durch die elastische Ausbildung bzw. Anbindung der ersten Befestigungsstelle 13, 13a ist zudem noch eine gewisse Bewegung des am Multifunktionsträger befestigten Türschlosses entlang der horizontalen Fahrzeugquerachse y möglich.

Insgesamt kann mittels der beiden Befestigungsstellen 13, 13a; 23, 23a, von denen die eine bewegliche und die andere eine starre Befestigung des Türschlosses ermöglicht, eine hinreichend stabile und gleichzeitig flexible Anbindung des Türschlosses an den Multifunktionsträger erreicht werden.

Ferner wird durch die flexible Anbindung der Scheibenführung 2 über den hierfür vorgesehenen Deformationsbereich 15 an den Haltewinkel 10 (mittels dem der Multifunktionsträger an einem Aggregateträger einer Kraftfahrzeugtür befestigt ist) sowie durch die ergänzende bewegliche und flexible Anbindung des am Multifunktionsträger anzuordnenden Türschlosses mittels der federnden Befestigungsstelle 13, 13a erreicht, dass nach der Befestigung des Multifunktionsträgers zusammen mit einem Aggregateträger an einer Kraftfahrzeugkarosserie eine zusätzliche, unabhängige, unmittelbare Befestigung der Scheibenführung 2 sowie des am Multifunktionsträger angeordneten Türschlosses an der Türkarosserie - unter Ausgleich von Toleranzen - ohne weiteres möglich ist.

Bei der Montage wird in der Weise vorgegangen, dass zunächst außerhalb der auszurüstenden Fahrzeugtür der Multifunktionsträger zusammen mit den hieran vormontierten Komponenten, insbesondere eines Außengriffhalters, eines Türschlosses sowie einer Schlossabdeckung als Diebstahlsicherung, an einem Aggregateträger befestigt wird, der darüber hinaus noch andere Funktionsgruppen einer Kraftfahrzeugtür, wie z. B. einen Fensterheber, ein Airbagmodul, Lautsprecher und dergleichen, tragen kann. Dieser Aggregateträger wird dann zusammen mit dem Multifunktionsträger sowie den weiteren hieran befestigten Funktionsgruppen an einer Türkarosserie befestigt. Anschließend werden zunächst das (mittels der hierfür vorgesehenen Befestigungsstellen 13,13a; 23, 23a) am Multifunktionsträger befestigte Türschloss und dann die Scheibenführung 2 (über die hierfür vorgesehenen Befestigungsstellen 21, 22) zusätzlich an der Türkarosserie befestigt, wobei durch die elastische, bewegliche Anbindung sowohl des Türschlosses als auch der Scheibenführung 2 an den Haltewinkel 10 Toleranzen ausgeglichen und eine Überbestimmung des Systems bei der Montage vermieden werden können.

Unabhängig davon erfolgt dann noch die Befestigung des Außengriffhalters GH am Türaußenblech TA, ebenfalls unter Ausnutzung von Elastizitäten, entsprechend der elastischen Anbindung der Befestigungsstellen 41 für den Außengriffhalter GH an dem Multifunktionsträger.

Dabei ist durch die teilweise starre Anbindung der Scheibenführung 2 an den Haltewinkel 10 (im oberen Endbereich O des längserstreckten Teilabschnittes T der Scheibenführung 2) sowie durch die teilweise starre Anbindung des Türschlosses an den Multifunktionsträger (über die mittels einer Rippe 24 verstärkte Befestigungsstelle 23, 23a) trotz der Flexibilität der Anordnung gleichzeitig eine hinreichende Stabilität gewährleistet.

## Patentansprüche

1. Multifunktionsträger für ein Kraftfahrzeug mit
- einem Halteabschnitt (1) zur Befestigung des Multifunktionsträgers an einem Aggregateträger einer Kraftfahrzeugtür,
- einer mit dem Halteabschnitt (1) verbundenen, längserstreckten Scheibenführung (2) für eine Fensterscheibe und
- Befestigungsstellen (13, 13a; 23, 23a) zur Befestigung eines Türschlosses an dem Multifunktionsträger,
wobei der Halteabschnitt (1) mit der Scheibenführung (2) entlang eines längserstreckten Teilabschnittes (T) des Multifunktionsträgers verbunden ist,
**dadurch gekennzeichnet,**
**dass** der Halteabschnitt (1) in einem Endbereich (O) des längserstreckten Teilabschnittes (T) im Wesentlichen starr mit der Scheibenführung (2) verbunden ist und in dem anderen Endbereich (U) des längserstreckten Teilabschnittes (T) flexibel mit der Scheibenführung (2) verbunden ist.

2. Multifunktionsträger nach Anspruch 1, **dadurch gekennzeichnet, dass** am Multifunktionsträger mindestens eine Befestigungsstelle (13, 13a; 23, 23a) für ein Funktionselement der Kraftfahrzeugtür, insbesondere ein Türschloss, in der Umgebung des zweiten Endbereiches (U) des längserstreckten Teilabschnittes (T) der Scheibenführung (2) vorgesehen sind.

3. Multifunktionsträger nach Anspruch 1 oder 2, **dadurch gekennzeichnet, dass** entlang der Erstreckungsrichtung (z) des Teilabschnittes (T) zwischen den beiden Endbereichen (O, U) des Teilabschnittes (T) im Multifunktionsträger eine Ausnehmung (A) vorgesehen ist.

4. Multifunktionsträger nach einem der vorhergehenden Ansprüche, **dadurch gekennzeichnet, dass** zur flexiblen Anbindung des Halteabschnittes (1) an einen Endbereich (U) des Teilabschnittes (T) mindestens ein deformierbarer Bereich (15) des Multifunktionsträgers vorgesehen ist.

5. Multifunktionsträger nach Anspruch 4, **dadurch gekennzeichnet, dass** der deformierbare Bereich (15) am Halteabschnitt (1) und/oder an der Scheibenführung (2) ausgebildet ist.

6. Multifunktionsträger nach Anspruch 4 oder 5, **dadurch gekennzeichnet, dass** der deformierbare Bereich (15) einstückig in den Multifunktionsträger integriert ist.

7. Multifunktionsträger nach einem der vorhergehenden Ansprüche, **dadurch gekennzeichnet, dass** der Halteabschnitt (1) und die Scheibenführung (2) einstückig aneinander angeformt sind und vorzugsweise der Multifunktionsträger insgesamt einstückig ausgebildet ist.

8. Multifunktionsträger nach einem der vorhergehenden Ansprüche, **dadurch gekennzeichnet, dass** der Halteabschnitt (1) und die Scheibenführung (2), sowie vorzugsweise der Multifunktionsträger insgesamt, aus Kunststoff bestehen.

9. Multifunktionsträger nach einem der vorhergehenden Ansprüche, **dadurch gekennzeichnet, dass** durch die flexible Anbindung des Halteabschnittes (1) an einen Endbereich (U) des längserstreckten Teilabschnittes (T) der Halteabschnitt (1) bezüglich der Scheibenführung (2) entlang mindestens einer Raumrichtung (x, y) beweglich ist.

10. Multifunktionsträger nach Anspruch 9, **dadurch gekennzeichnet, dass** der Halteabschnitt (1) bezüglich der Scheibenführung (2) senkrecht zur Erstreckungsrichtung (z) der Scheibenführung (2) beweglich ist.

11. Multifunktionsträger nach Anspruch 9 oder 10, **dadurch gekennzeichnet, dass** der Halteabschnitt (1) relativ zu der Scheibenführung (2) - bezogen auf den in eine Kraftfahrzeugtür eingebauten Zustand des Multifunktionsträgers - entlang der Fahrzeuglängsachse (x) und/oder der horizontalen Fahrzeugquerachse (y) beweglich ist.

12. Multifunktionsträger nach Anspruch 2 und 4, **dadurch gekennzeichnet, dass** zwei Befestigungsstellen (13, 13a; 23, 23a) für das Funktionselement, insbesondere ein Türschloss, beidseits des deformierbaren Bereiches (15) vorgesehen sind.

13. Multifunktionsträger nach Anspruch 2 oder 12, **dadurch gekennzeichnet, dass** eine Befestigungsstelle (13, 13a) für das Funktionselement am Halteabschnitt (1) und eine Befestigungsstelle (23, 23a) an der Scheibenführung (2) vorgesehen ist.

14. Multifunktionsträger nach einem der vorhergehenden Ansprüche, **dadurch gekennzeichnet, dass** eine Befestigungsstelle (13, 13a) für das Funktionselement zur Schaffung einer spielbehafteten Verbindung ausgebildet ist, so dass das Funktionselement relativ zu dieser Befestigungsstelle (13, 13a) begrenzt bewegbar ist, und eine andere Befestigungsstelle (23, 23a) für das Funktionselement zur Schaffung einer starren Verbindung, insbesondere als Befestigungsöffnung für eine Schraube oder einen Niet, ausgebildet ist.

15. Multifunktionsträger nach Anspruch 14, **dadurch gekennzeichnet, dass** die eine Befestigungsstelle (13, 13a) für das Funktionselement eine Schiebeführung (13a) aufweist, so dass das Funktionselement relativ zu dieser Befestigungsstelle (13, 13a) verschieblich ist, und dass ein einen Anschlag bildendes Rastelement vorgesehen ist.

16. Multifunktionsträger nach Anspruch 14 und 15, **dadurch gekennzeichnet, dass** die beiden Befestigungsstelle (13, 13a; 23, 23a) an unterschiedlich stark deformierbaren Bereichen des Multifunktionsträgers angeordnet sind.

17. Multifunktionsträger nach Anspruch 3 und einem der Ansprüche 14 bis 16, **dadurch gekennzeichnet, dass** die eine Befestigungsstelle (13, 13a) die Ausnehmung (A) des Multifunktionsträgers überragt.

18. Multifunktionsträger nach einem der vorhergehenden Ansprüche, **dadurch gekennzeichnet, dass** die Scheibenführung (2) zwei entlang ihrer Erstreckungsrichtung (z) voneinander beabstandete Befestigungsstellen (21, 22) zur Befestigung an einer Türkarosserie aufweist, wobei die Befestigungsstellen (21, 22) vorzugsweise im Bereich der beiden Enden der längserstreckten Scheibenführung (2) liegen.

19. Multifunktionsträger nach Anspruch 18, **dadurch gekennzeichnet, dass** zwischen den beiden Befestigungsstellen (21, 22) zur Befestigung der Scheibenführung (2), an einer Türkarosserie eine Befestigungsstelle (23, 23a) zur Befestigung eines Türschlosses am Multifunktionsträger angeordnet ist.

20. Multifunktionsträger nach Anspruch 19, **dadurch gekennzeichnet, dass** die zwischen den beiden Befestigungsstellen (21, 22) für die Scheibenführung (2) gelegene Befestigungsstelle (23, 23a) für das Türschloss für eine flächige Anlage an dem Türschloss ausgebildet ist, so dass am Multifunktionsträger wirkende Kräfte durch den Verbund von Scheibenführung (2) und Türschloss auf eine Türkarosserie übertragen werden können.

21. Multifunktionsträger nach einem der vorhergehenden Ansprüche, **dadurch gekennzeichnet, dass** am Multifunktionsträger Befestigungsstellen (31, 32) für eine Sicherungsabdeckung zum Abdecken von Bereichen eines Türschlosses vorgesehen sind.

22. Multifunktionsträger nach einem der vorhergehenden Ansprüche, **dadurch gekennzeichnet, dass** am Multifunktionsträger ein Lagerabschnitt (4) für einen Türaußengriffhalter (GH) ausgebildet ist.

23. Multifunktionsträger nach Anspruch 22, **dadurch gekennzeichnet, dass** an dem Lagerabschnitt (4) Befestigungsstellen (41) für den Türaußengriffhalter (GH) flexibel angebunden sind.

24. Multifunktionsträger nach einem der vorhergehenden Ansprüche, **dadurch gekennzeichnet, dass** an dem Multifunktionsträger mindestens ein Halter (27) für ein elektrisches Kabel angeformt ist.

25. Multifunktionsträger nach einem der vorhergehenden Ansprüche, **dadurch gekennzeichnet, dass** am Multifunktionsträger Führungsmittel (26) zur Einführung einer Fensterscheibe in einen Führungskanal (20) der Scheibenführung (2) vorgesehen sind.

26. Multifunktionsträger nach Anspruch 25, **dadurch gekennzeichnet, dass** der Führungskanal (20) eine Gleitführung aufweist, deren eines freies Ende von den Führungsmitteln (26) aufgeweitet gehalten wird.

## Claims

1. Multifunctional support for a motor vehicle with
- a retaining section (1) for fastening the multifunctional support on an assembly support of a motor vehicle door;
- an elongated window guide (2) connected to the retaining section (1) for a window pane and
- fastening points (13, 13a; 23, 23a) for fastening a door lock on the multifunctional support
wherein the retaining section (1) is connected to the window guide (2) along an elongated subsection (T) of the multifunctional support
**characterised in that**
the retaining section (1) is connected in one terminal zone (O) of the longitudinally extended subsection (T) substantially rigidly to the window guide (2) and in the other terminal zone (U) of the longitudinally extended subsection (T) is connected flexibly to the window guide (2).

2. Multifunctional support according to claim 1 **characterised in that** on the multifunctional support there is at least one fastening point (13, 13a; 23, 23a) for a functional element of the motor vehicle door, more particularly a door lock, in the vicinity of the second terminal zone (U) of the longitudinally extended subsection (T) of the window guide (2).

3. Multifunctional support according to claim 1 or 2, **characterised in that** a recess (A) is provided in the multifunctional support along the extension direction (z) of the subsection (T) between the two terminal zones (O, U) of the subsection (T).

4. Multifunctional support according to one of the preceding claims, **characterised in that** at least one deformable region (15) of the multifunctional support is provided for the flexible connection of the retaining section (1) to a terminal zone (U) of the subsection (T).

5. Multifunctional support according to claim 4, **characterised in that** the deformable region (15) is formed on the retaining section (1) and/or on the window guide (2).

6. Multifunctional support according to claim 4 or 5, **characterised in that** the deformable region (15) is integrated in one piece in the multifunctional support.

7. Multifunctional support according to one of the preceding claims, **characterised in that** the retaining section (1) and the window guide (2) are formed in one piece with each other and preferably the multifunctional support is formed in one piece overall.

8. Multifunctional support according to one of the preceding claims, **characterised in that** the retaining section (1) and the window guide (2) as well as preferably the multifunctional support as a whole are made of plastics.

9. Multifunctional support according to one of the preceding claims, **characterised in that** through the flexible connection of the retaining section (1) at one terminal zone (U) of the longitudinally extended subsection (T) the retaining section (1) is movable relative to the window guide (2) along at least one spatial direction (x, y).

10. Multifunctional support according to claim 9, **characterised in that** the retaining section (1) is movable relative to the window guide (2) perpendicular to the extension direction (z) of the window guide (2)

11. Multifunctional support according to claim 9 or 10, **characterised in that** the retaining section (1) is movable relative to the window guide (2) - in relation to the installed state of the multifunctional support in a motor vehicle door - along the vehicle longitudinal axis (x) and /or the horizontal vehicle transverse axis (y).

12. Multifunctional support according to claims 2 and 4, **characterised in that** two fastening points (13, 13a; 23 23a) are provided for the functional element, more particularly door lock, either side of the deformable region (15).

13. Multifunctional support according to claim 2 or 12, **characterised in that** one fastening point (13, 13a) for the functional element is provided on the retaining section (1) and one fastening point (23, 23a) is provided on the window guide (2).

14. Multifunctional support according to one of the preceding claims, **characterised in that** one fastening point (13, 13a) for the functional element is designed to provide a play connection so that the functional element can move restricted relative to this fastening point (13, 13a) and another fastening point (23, 23a) for the functional element is designed to provide a rigid connection, more particularly as fastening opening for a screw or rivet.

15. Multifunctional support according to claim 14, **characterised in that** the one fastening point (13, 13a) for the functional element has a sliding guide (13a) so that the functional element is displaceable relative to this fastening point (13, 13a) and that a detent element is provided which forms a stop.

16. Multifunctional support according to claim 14 and 15, **characterised in that** the two fastening points (13, 13a; 23, 23a) are arranged on regions of the multifunctional support which deform differently.

17. Multifunctional support according to claim 3 and one of claims 14 to 16, **characterised in that** the one fastening point (13, 13a) projects over the recess (A) of the multifunctional support.

18. Multifunctional support according to one of the preceding claims, **characterised in that** the window guide (2) has two fastening points (21, 22) spaced out from each other along their extension direction (z) for fastening on a door body whereby the fastening points (21, 22) preferably lie in the region of the two ends of the longitudinally extended window guide (2).

19. Multifunctional support according to claim 18, **characterised in that** a fastening point (23, 23a) for fastening a door lock on the multifunctional support is mounted between the two fastening points (21, 22) for fastening the window guide (2) on the door body.

20. Multifunctional support according to claim 19, **characterised in that** the fastening point (23, 23a) for the door lock placed between the two fastening points (21, 22) for the window guide (2) is designed for a flat surface contact against the door lock so that forces acting on the multifunctional support can be transferred to the door body through the combination of window guide (2) and door lock.

21. Multifunctional support according to one of the preceding claims, **characterised in that** fastening points (31, 32) are provided on the multifunctional support for a security cover for covering regions of a door lock.

22. Multifunctional support according to one of the preceding claims, **characterised in that** a bearing section (4) is formed on the multifunctional support for a door outside handle holder (GH).

23. Multifunctional support according to claim 22, **characterised in that** fastening points (41) for the door outside handle holder (GH) are flexibly linked to the bearing section (4).

24. Multifunctional support according to one of the preceding claims, **characterised in that** at least one holder (27) for an electric cable is formed on the multifunctional support.

25. Multifunctional support according to one of the preceding claims, **characterised in that** guide means (26) for introducing a window pane into a guide channel (20) of the window guide (2) are provided on the multifunctional support.

26. Multifunctional support according to claim 25, **characterised in that** the guide channel (20) has a sliding guide whose one free end is held widened out by the guide means (26).

## Revendications

1. Support multifonctions pour un véhicule automobile, comprenant :
- un tronçon de maintien (1) pour la fixation du support multifonctions sur un porte-accessoires d'une porte de véhicule automobile,
- un guide-vitre (2) allongé en longueur, relié au tronçon de maintien (1), pour une vitre de fenêtre, et
- des points de fixation (13, 13a ; 23, 23a) pour la fixation d'une serrure de porte sur le support multifonctions,
dans lequel le tronçon de maintien (1) est relié au guide-vitres (2) le long d'un tronçon partiel (T) allongé en longueur du support multifonctions,
**caractérisé en ce que**
le tronçon de maintien (1) est relié, dans une zone terminale (O) du tronçon partiel (T) allongé en longueur, essentiellement rigidement avec le guide-vitre (2), et dans l'autre zone terminale (U) du tronçon partiel (T) allongé en longueur, il est relié de manière flexible au guide-vitre (2).

2. Support multifonctions selon la revendication 1, **caractérisé en ce qu'**il est prévu sur le support multifonctions au moins un point de fixation (13, 13a ; 23, 23a) pour un élément fonctionnel de la porte de véhicule, en particulier une serrure de porte, dans l'environnement de la seconde zone terminale (U) du tronçon partiel (T) allongé en longueur du guide-vitre (2).

3. Support multifonctions selon la revendication 1 ou 2, **caractérisé en ce qu'**il est prévu un évidement (A) dans le support multifonctions, entre les deux zones terminales (O, U) du tronçon partiel (T), le long de la direction d'extension (z) du tronçon partiel (T).

4. Support multifonctions selon l'une des revendications précédentes, **caractérisé en ce que**, pour la liaison flexible du tronçon de maintien (1) sur une zone terminale (U) du tronçon partiel (T) il est prévu au moins une zone déformable (15) du support multifonctions.

5. Support multifonctions selon la revendication 4, **caractérisé en ce que** la zone déformable (15) est réalisée sur le tronçon de maintien (1) et/ou sur le guide-vitre (2).

6. Support multifonctions selon la revendication 4 ou 5, **caractérisé en ce que** la zone déformable (15) est intégrée d'un seul tenant dans le support multifonctions.

7. Support multifonctions selon l'une des revendications précédentes, **caractérisé en ce que** le tronçon de maintien (1) et le guide-vitre (2) sont conformés d'un seul tenant l'un contre l'autre, et **en ce que** le support multifonctions est réalisé de préférence dans son ensemble d'un seul tenant.

8. Support multifonctions selon l'une des revendications précédentes, **caractérisé en ce que** le tronçon de maintien (1) et le guide-vitre (2), ainsi que de préférence le support multifonctions dans son ensemble, sont en matière plastique.

9. Support multifonctions selon l'une des revendications précédentes, **caractérisé en ce que**, grâce à la liaison flexible du tronçon de maintien (1) sur une zone terminale (U) du tronçon partiel (T) allongé en longueur, le tronçon de maintien (1) est mobile par rapport au guide-vitre (2) le long d'au moins une direction dans l'espace (x, y).

10. Support multifonctions selon la revendication 9, **caractérisé en ce que** le tronçon de maintien (1) est mobile par rapport au guide-vitre (2) perpendiculairement à la direction d'extension (z) du guide-vitre (2).

11. Support multifonctions selon la revendication 9 ou 10, **caractérisé en ce que** le tronçon de maintien (1) est mobile par rapport au guide-vitre (2), par référence à l'état du support multifonctions monté dans une porte de véhicule, le long de l'axe longitudinal (x) du véhicule et/ou de l'axe transversal horizontal (y) du véhicule.

12. Support multifonctions selon les revendications 2 et 4, **caractérisé en ce qu'**il est prévu deux points de fixation (13, 13a ; 23, 23a) pour l'élément fonctionnel, en particulier une serrure de porte, des deux côtés de la zone déformable (15).

13. Support multifonctions selon la revendication 2 ou 12, **caractérisé en ce qu'**il est prévu un point de fixation (13, 13a) pour l'élément fonctionnel sur le tronçon de maintien (1) et un point de fixation (23, 23a) sur le guide-vitre (2).

14. Support multifonctions selon l'une des revendications précédentes, **caractérisé en ce qu'**un point de fixation (13, 13a) pour l'élément fonctionnel est réalisé pour obtenir une liaison affectée d'un jeu, de sorte que l'élément fonctionnel est déplaçable de façon limitée par rapport à ce point de fixation (13, 13a), et un autre point de fixation (23, 23a) pour l'élément fonctionnel est réalisé pour obtenir une liaison rigide, en particulier sous forme d'une ouverture de fixation pour une vis ou un rivet.

15. Support multifonctions selon la revendication 14, **caractérisé en ce que** l'un des points de fixation (13, 13a) pour l'élément fonctionnel comprend un guidage à translation (13a), de sorte que l'élément fonctionnel est capable de translation par rapport à ce point de fixation (13, 13a), et **en ce qu'**il est prévu un élément d'enclenchement formant une butée.

16. Support multifonctions selon les revendications 14 et 15, **caractérisé en ce que** les deux points de fixation (13, 13a ; 23, 23a) sont agencés sur des zones, capables de se déformer à des intensités différentes, du support multifonctions.

17. Support multifonctions selon la revendication 3 et l'une des revendications 14 à 16, **caractérisé en ce que** l'un des points de fixation (13, 13a) dépasse au-delà de l'évidement (A) du support multifonctions.

18. Support multifonctions selon l'une des revendications précédentes, **caractérisé en ce que** le guide-vitre (2) comprend deux points de fixation (21, 22) écartés l'un de l'autre le long de sa direction d'extension (z) pour la fixation sur une carrosserie de porte, et les points de fixation (21, 22) sont de préférence situés dans la zone des deux extrémités du guide-vitre (2) allongé en longueur.

19. Support multifonctions selon la revendication 18, **caractérisé en ce qu'**un point de fixation (23, 23a) pour la fixation d'une serrure de porte sur le support multifonctions est agencé entre les deux points de fixation (21, 22) pour la fixation du guide-vitre (2) sur une carrosserie de porte.

20. Support multifonctions selon la revendication 19, **caractérisé en ce que** le point de fixation (23, 23a) pour la serrure de porte, située entre les deux points de fixation (21, 22) pour le guide-vitre (2), est réalisé pour un contact à plat contre la serrure de porte, de sorte que les forces qui agissent sur le support multifonctions peuvent être transmises par le groupe formé par le guide-vitre (2) et la serrure de porte vers une carrosserie de porte.

21. Support multifonctions selon l'une des revendications précédentes, **caractérisé en ce que** des points de fixation (31, 32) pour un recouvrement de sécurité destiné à recouvrir les zones d'une serrure de porte sont prévus sur le support multifonctions.

22. Support multifonctions selon l'une des revendications précédentes, **caractérisé en ce qu'**un tronçon de montage (4) pour une monture de poignée de porte extérieure (GH) est réalisé sur le support multifonctions.

23. Support multifonctions selon la revendication 22, **caractérisé en ce que** des points de fixation (41) pour la monture de poignée de porte extérieure (GH) sont reliés de manière flexible au tronçon de montage (4).

24. Support multifonctions selon l'une des revendications précédentes, **caractérisé en ce qu'**au moins un support (27) pour un câble électrique est conformé sur le support multifonctions.

25. Support multifonctions selon l'une des revendications précédentes, **caractérisé en ce que** des moyens de guidage (26) sont prévus sur le support multifonctions pour l'introduction d'une vitre de fenêtre dans un canal de guidage (20) du guide-vitre (2).

26. Support multifonctions selon la revendication 25, **caractérisé en ce que** le canal de guidage (20) comprend un guidage à coulissement, dont une extrémité libre est maintenue évasée par les moyens de guidage (26).
